# EUROPEAN PATENT APPLICATION

(11) **EP 1 547 697 A1**
(43) Date of publication of application: **29.06.2005**
(21) Application number: 03797567.9
(22) Date of filing: 09.09.2003
(51) Int. Cl.: B05D 1/20, G03C 1/73, B01J 19/00

(54) **ORGANIC ULTRATHIN FILM, CUMULATE THEREOF AND PROCESS FOR PRODUCING THE SAME**

(30) Priority: 09.09.2002 JP 2002263434
(71) Applicant: Japan Science and Technology Agency, Kawaguchi-shi, Saitama 332-0012 (JP)
(72) Inventor: IJIRO, Kuniharu, Chuo-ku, Sapporo-shi, Hokkaido 064-0952 (JP); MATSUMOTO, Jin, Miyazaki-shi, Miyazaki 889-2152 (JP); SHIMOMURA, Masatsugu, Sapporo-shi, Hokkaido 004-0071 (JP)
(74) Representative: Calamita, Roberto
(86) International application number: PCT/JP2003/011514
(87) International publication number: WO 2004/026491

(57) **Abstract**

A novel organic ultrathin membrane **characterized in that** an amphiphilic compound having a pigment group and a nucleic acid base is aligned due to base-pairing with an oligonucleotide which is capable of forming a base pair with the nucleic acid base to thereby constitute a monolayer is provided. In this organic ultrathin membrane, free space is provided around a pigment molecule so as to enable photoisomerization of the pigment molecule in a high-density solid state. Thus, it is useful as an optical memory, etc. Further, a process for producing the organic ultrathin membrane is provided.

## Description

### Technical Field

The invention of this application relates to an organic ultrathin membrane, a cumulative product thereof and a process for producing the same.

### Background Art

Conventionally, it is known that photoisomerization of an organic pigment is used as one of the principles of operation of an optical memory. Photoisomerization here is to reversibly convert 2 or more structures of a pigment molecule by irradiating the pigment molecule with light. For example, when UV light is irradiated, a pigment molecule has A structure, and when visible light is irradiated, it has B structure. Here, if A structure is defined as "0", and B structure is defined as "1", it becomes the same memory material as a conventional electronic device. However, generally in the process of converting A structure into B structure or in the inverse process, a packing ratio of pigment molecules in the space is changed, therefore, in a solid in which pigment molecules have been packed in a high density, photoisomerization does not proceed.

Thus, it is considered that providing free space around a pigment molecule is effective for allowing photoisomerization in a high-density solid. As a measure for achieving this, it attracts attention that a thin membrane of a monomolecular layer is formed by dispersing an amphiphilic compound on the water surface, a monolayer with a high density is formed by compressing the formed thin membrane in the surface, and the formed membrane is laminated on a solid substrate such as glass, whereby a high-density solid thin membrane on which a monolayer has been laminated is formed. It is formed into, so-called a Langmuir-Blodgett membrane, namely an LB membrane. For example, an attempt using azobenzene, which is a pigment, has been made (Documents 1, 2 and 3). It is known that azobenzene is isomerized from the trans- to the cis-form by UV light irradiation, and returns from the cis- to the trans-form by visible light.

In this attempt, a polymer having azobenzene as a side chain is synthesized, a monolayer is formed on the steam-water interface, whereby an LB membrane is produced. In addition, synthesis of a cyclic amphiphilic compound of azobenzene, and production of an LB membrane using the compound have been carried out.

By this method, designing of a polymer molecule is difficult, therefore, it has been pointed out that it is difficult to secure free space for azobenzene (the polymer synthesis is a radical reaction, therefore, it is difficult to control the distance between azobenzenes).

In addition, an attempt has been made to form an LB membrane by synthesizing a disulfide compound composed of azobenzene and producing a self-assembled layer (self-assembled monolayer: SAM) on a gold substrate, or by synthesizing an anionic (negative ion) amphiphilic azobenzene compound and dispersing it on an aqueous solution of a cationic (positive ion) polymer to produce a polyion complex monolayer, in which the amphiphilic compound and the polymer have been bound to each other through an ionic bond on the steam-water interface (Document 4).

However, in the former case of the self-assembled layer with the azobenzene disulfide compound, there is a big problem in that the solid substrate is limited to gold, and in the latter case, there is a problem in that synthesis of the cationic polymer is difficult, and further the control of the distance between the cationic groups is difficult.
Document 1: K. Ichimura, Chem. Rev., 100, pp. 1847-1873 (2000)
Document 2: Nikkei Advanced Technology, 2002, 6, 10 (vol. 15), pp. 10-14
Document 3: Seki, T. Fukuchi, K. Ichimura, Langmuir, 16, pp. 3564-3567 (2000)
Document 4: M. Matsumoto, S. Terrettaz, H. Tachibana, Advanced in Colloid and Interface Science, 87, pp. 147-164 (2000)

Accordingly, an object of the invention of this application is to solve the foregoing problems in the conventional techniques and to provide a novel organic ultrathin membrane which enables photoisomerization of a pigment molecule in a high-density solid state by providing free space around the pigment molecule and is useful as an optical memory or the like, and a process for producing the organic ultrathin membrane.

### Disclosure of the Invention

The invention of this application solves the foregoing problems and provides, firstly, an organic ultrathin membrane characterized in that an amphiphilic compound having a pigment group and a nucleic acid base is aligned due to base-pairing with an oligonucleotide which is capable of forming a base pair with the nucleic acid base to thereby constitute a monolayer.

With regard to this organic ultrathin membrane, the invention of this application provides, secondly, the organic ultrathin membrane characterized in that the amphiphilic compound has a chromophore in the hydrophobic chain as a pigment group, thirdly, the organic ultrathin membrane characterized in that the chromophore is a photoisomerization group, and fourthly, the organic ultrathin membrane characterized in that the chromophore is an azobenzene group.

In addition, the invention of this application provides, fifthly, a cumulative product of an organic ultrathin membrane characterized in that a condensed membrane obtained by compressing a monolayer is laminated on a solid substrate.

Further, the invention of this application provides, sixthly, a process for producing an organic ultrathin membrane, which is a process for producing the foregoing organic ultrathin membrane, characterized in that an amphiphilic compound having a nucleic acid base is spread on an aqueous solution containing an oligonucleotide to form a base pair of the nucleic acid base of the amphiphilic compound and the oligonucleotide to thereby constitute a monolayer, and seventhly, a process for producing a cumulative product of an organic ultrathin membrane characterized by compressing the obtained monolayer of the organic ultrathin membrane to form a condensed membrane and laminating the condensed membrane on a solid substrate.

### Brief Description of Drawings

Figs. 1A and 1B are views schematically showing the difference of photoisomerization due to the presence of or lack of free space.
Fig. 2 is a schematic view showing methods of surface pressure-area isotherms and reflection absorption spectroscopy (measured in situ).
Fig. 3 shows graphs illustrating surface pressure-area isotherms of a monolayer in a TE buffer and reflection absorption spectra.
Fig. 4 shows a graph illustrating surface pressure-area isotherms when an oligonucleotide was added.
Fig. 5 shows graphs illustrating reflection absorption spectra associated with Fig. 4.
Fig. 6 is a view schematically showing an alignment state of a monolayer in the case of d(GGA)₁₀.
Fig. 7 is a view schematically showing a measurement method of UV-visible absorption spectra by the ATR method for a cumulative product.
Fig. 8 shows graphs illustrating absorption spectra in each of the cases of UV light irradiation and visible light irradiation measured by the method in Fig. 7
Fig. 9 shows graphs illustrating absorption spectra change with time upon alternate irradiation with UV and visible light.

### Best Mode for Carrying Out the Invention

The invention of this application has the foregoing characteristics, however, hereunder, an embodiment of the invention will be explained.

What is particularly characteristic is that, though the inventors found that an amphiphilic nucleic acid base derivative (DNA mimetic) formed a similar base pair to DNA on the steam-water interface, they further found that by organizing a DNA mimetic having a pigment group with the use of a single-strand DNA as a template, accurate alignment could be achieved. In other words, in the invention of this application, an organic ultrathin membrane composed of a monolayer in which, by using an oligonucleotide as a template, an amphiphilic compound having a pigment group and a nucleic acid base is aligned due to base-pairing of the nucleic acid base with the oligonucleotide is provided.

More specifically, for example, as the amphiphilic compound, the one having a chromophore in the hydrophobic chain as a pigment group is taken into consideration. In addition, specifically, according to the invention of this application, a monolayer of an amphiphilic thymine derivative having azobenzene in the hydrophobic chain is provided by using an oligonucleotide as a template.

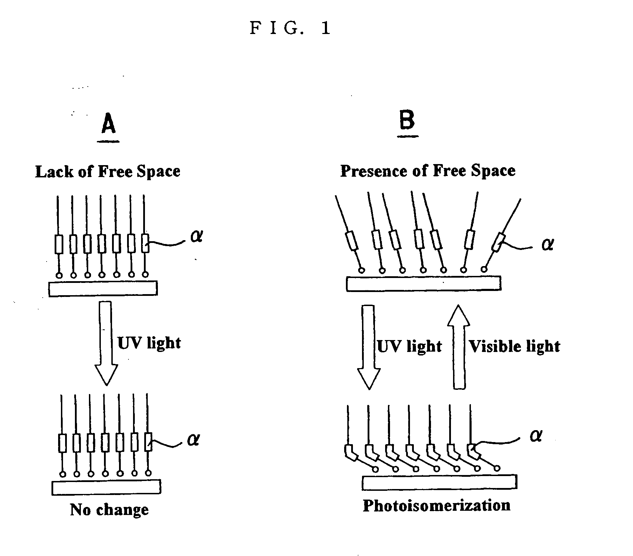

Conventionally, for example, as shown in Fig. 1A, it was difficult to induce photoisomerization when there is no free space even in an LB membrane in which a pigment molecule such as azobenzene (α) is present. However, according to the invention of this application, as shown in Fig. 1B, free space can be provided, thereby achieving photoisomerization.

According to the invention of this application, free space can be provided, and further by minimizing the free space, a high-density membrane can be achieved.

Of course, the foregoing amphiphilic compound in the invention of this application may be the one having a hydrophilic group (chain) and a hydrophobic group (chain), and its nucleic acid base or pigment group may be any kind. However, the nucleic acid base should be the one capable of forming a base pair with an oligonucleotide as a template. A combination of both will be selected in response to the use and given function of the organic ultrathin membrane, and its cumulative product.

A representative example of the combination is a thymine-adenine base pair. With regard to the amphiphilic compound of azobenzene, in order to control its density in a monolayer, base-pairing of deoxyribonucleic acid (DNA) is utilized. In other words, for example, first, an amphiphilic compound, in which azobenzene and a nucleic acid base (thymine in this example) have been bound through a covalent bond is spread (dispersed) on an aqueous solution containing an oligonucleotide (DNA fragment). If an oligonucleotide with a repeat structure of adenine-guanine-guanine is used here, a base pair is formed between the amphiphilic compound and the oligonucleotide on the steam-water interface. In other words, the azobenzene-thymine compound forms a base pair only with the adenine of the oligonucleotide (A-T pair). At this time, to the guanine, nothing is bound, whereby space is generated only in this area. Accordingly, free space for photoisomerization of azobenzene is acquired. In a complex monolayer of an azobenzene-thymine amphiphilic compound and an oligonucleotide formed on the steam-water interface in this way, even if it is compressed, small space (free space) around azobenzene is maintained. Therefore, in an LB membrane obtained from the monolayer, trans-cis photoisomerization can be easily induced.

Hereunder, an organic ultrathin membrane composed of the monolayer in the case of this specific example and a cumulative product thereof will be explained in detail.

### <Embodiment 1>

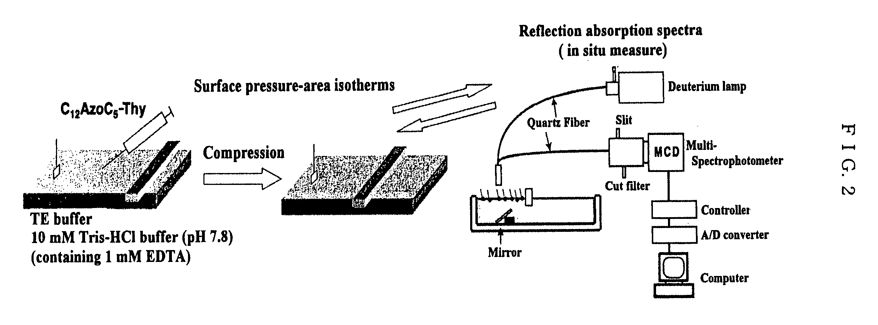

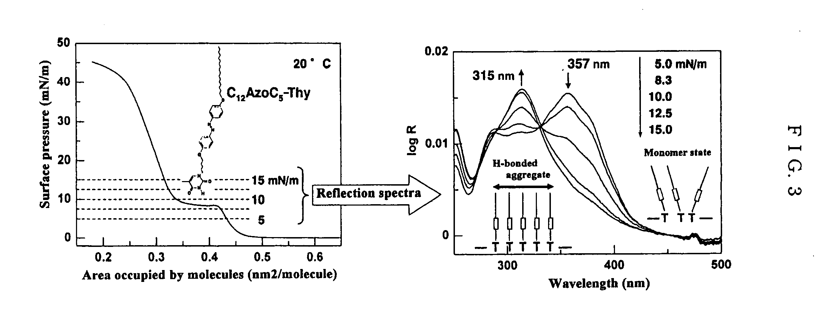

A mixed solution of chloroform and ethanol (9/1 v/v) containing C₁₂AzoC₅-Thy having azobenzene and thymine in the partial structure represented by the following formula: 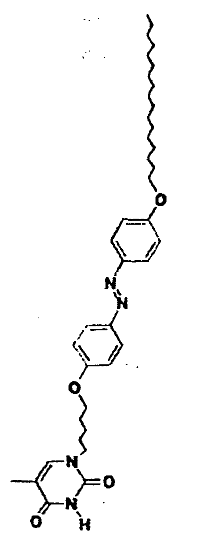 was spread on 10 mM Tris-HCl buffer containing 1 mM EDTA (pH 7.8, TE buffer), and surface pressure-area isotherms (π-A) were measured. In addition, at the same time as π-A isotherms were measured, reflection spectra of the monolayer on the water surface were measured "in situ" with a spectrophotometer provided with a Y-type optical fiber. The obtained spectra were standardized according to the density of the azobenzene chromophore. The measurement method and the results are shown in Fig. 2 and Fig. 3, respectively. With regard to the monolayer on the TE buffer, it was found that when the surface pressure was 5.0 mN/m, the membrane was in a liquid state, and azobenzene was in a monomer state as seen from the absorption spectrum. On the other hand, it was confirmed that when the surface pressure was 15 mN/m or higher by compression, the membrane was in a solid state, and a hydrogen-bonded aggregate was formed, and photoisomerization hardly occurred in this aggregate.

Subsequently, to the TE buffer, 25 nM oligonucleotide: dA₃₀, d(GA)₁₅ or d(GAA)₁₀ was added. Here, A represents adenine, and G represents guanine. For example, dA₃₀ represents an oligonucleotide, which is a sequence of 30 adenines.

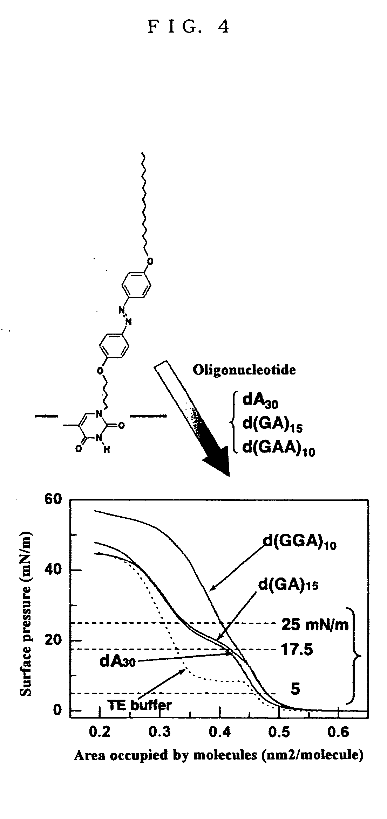

In other words, as a template oligonucleotide for organizing C₁₂AzoC₅-Thy molecule, dA₃₀, in which dA capable of forming a base pair with Thy has been arranged in series, or d(GA)₁₅ or d(GGA)₁₀, in which dA has been arranged every other nucleic acid base or every third nucleic acid base was added to the lower aqueous phase. In order to confirm that C₁₂AzoC₅-Thy molecule recognizes the template, π-A isotherms of C₁₂AzoC₅-Thy were measured on the TE buffer at 20°C. The results are shown in Fig. 4. In the case where the foregoing oligonucleotide was not added, phase transition occurred when the surface pressure was about 10 mN/m, and a solid membrane was formed when the surface pressure was higher than the value. However, by adding dA₃₀ to the lower aqueous phase, a monolayer was swollen and phase transition pressure was increased. In the case where d(GA)₁₅, in which dA has been arranged every other nucleic acid base was added to the lower aqueous phase, comparing with the case of dA₃₀, swollenness of the monolayer in a liquid state was observed, however, in a solid state, the isotherms accorded to each other. However, by adding d(GGA)₁₀, in which dA has been arranged every third nucleic acid base, phase transition did not occur, and swollenness of the monolayer was maintained even at a high surface pressure.

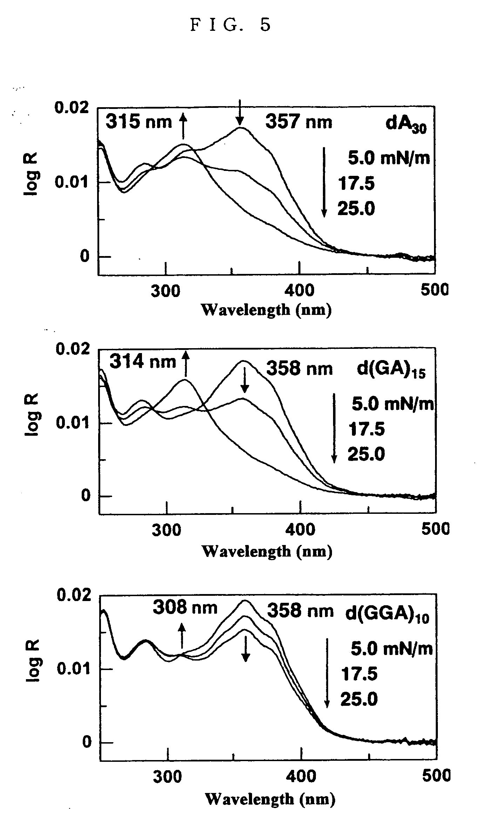

In order to evaluate the effect of the sequence of the template oligonucleotide added to the lower phase on the packing state of the azobenzene groups, reflection spectra of monolayer on the water surface were measured. The results are shown in Fig. 5. On dA₃₀, the maximum absorption wavelength was 357 nm at 5 mN/m where the monolayer was in a liquid state; therefore, it was found that most of the azobenzene chromophores in the monolayer were in a monomer state. However, absorption was also observed at around 320 nm; therefore, it is considered that a hydrogen-bonded aggregate was formed by part of azobenzenes. At 25 mN/m where a solid membrane was formed, the spectrum was shifted to 314 nm, and a hydrogen-bonded aggregate was formed. In the case where d(GA)₁₅ was added to the lower aqueous phase as a template, the absorption derived from a hydrogen-bonded aggregate was weaker comparing with the case of dA₃₀ at 5 mN/m which is lower than the phase transition pressure; therefore, it is considered that azobenzene groups were dispersed better. However, at 25 mN/m where a solid membrane was formed by a monolayer, the absorption was shifted to a shorter wavelength (314 nm); therefore, it was found that a hydrogen-bonded aggregate was formed with azobenzene. On the other hand, when a monolayer was formed on d(GGA)₁₀, the reflection spectrum with a maximum wavelength of 358 nm was obtained; therefore, it was found that even at a high surface pressure, monomer state was maintained. It was found that azobenzene groups in a monolayer can be completely dispersed by separating dA on the template oligonucleotide by 2 or more nucleic acid bases when a C₁₂AzoC₅-Thy molecule is organized.

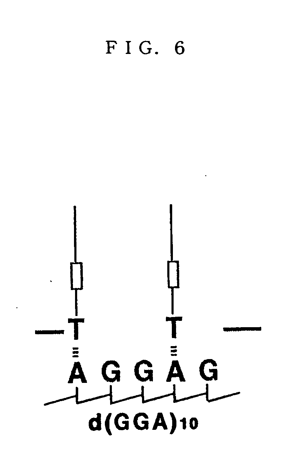

Accordingly, it is considered that formation of an aggregate of azobenzenes was inhibited by forming a base pair of C₁₂AzoC₅-Thy with dA on d(GGA)₁₀ added to the lower aqueous phase as a template to provide sufficient space between azobenzenes as schematically shown in Fig. 6.

### <Embodiment 2>

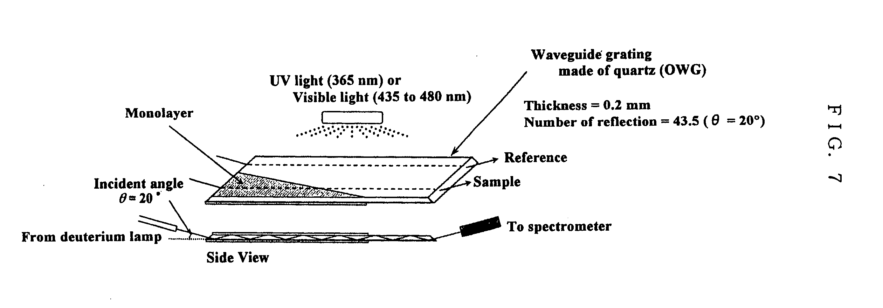

Subsequently, a monolayer formed by the foregoing process was transferred to a quartz substrate, and as shown in Fig. 7, by alternate irradiation with UV light and visible light, UV-visible absorption spectra were measured by the ATR method. By doing this, occurrence of photoisomerization as the following formula was evaluated.

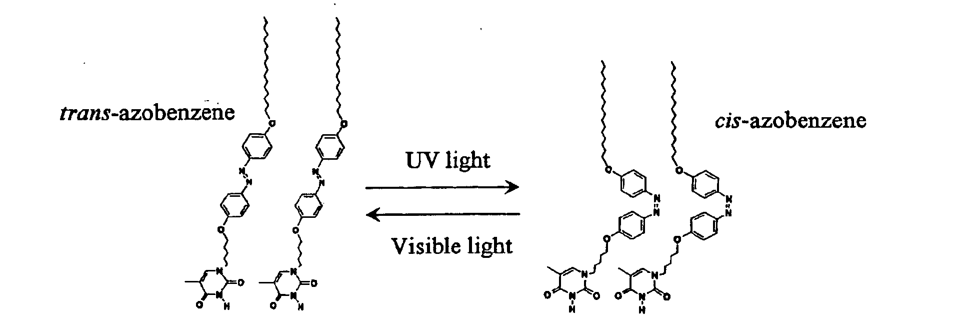

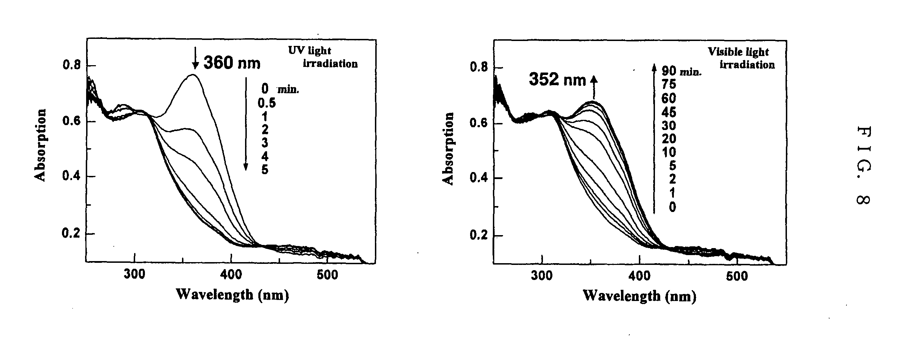

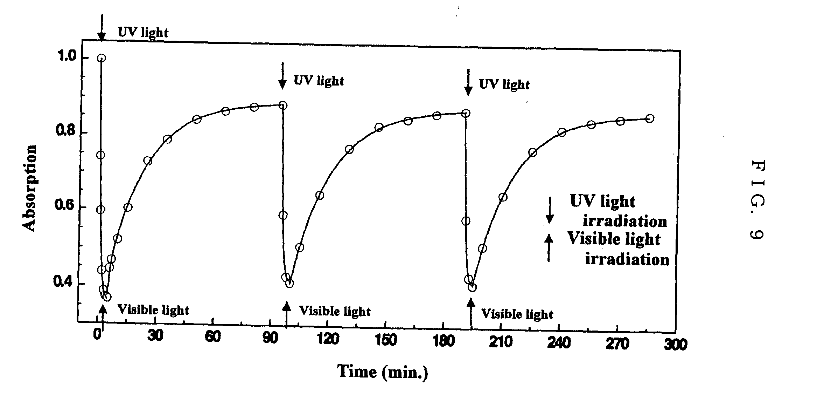

Specifically, on d(GGA)₁₀, the monolayer was transferred to a quartz substrate with a high surface pressure of 25 mN/m, and photoisomerization was carried out. The results are shown in Fig. 8 and Fig. 9.

By UV light irradiation, the trans-form that has a maximum absorption of 360 nm was decreased, and the cis-form was produced. Then, when visible light was irradiated, it was confirmed that it returned to the trans-form. This response was stable.

### Industrial Applicability

As described in detail above, according to the invention of this application, the problems in the conventional techniques are solved and a novel organic ultrathin membrane which enables photoisomerization of a pigment molecule in a high-density solid state by providing free space around the pigment molecule and is useful as an optical memory or the like, and a process for producing the organic ultrathin membrane can be provided.

## Claims

1. An organic ultrathin membrane **characterized in that** an amphiphilic compound having a pigment group and a nucleic acid base is aligned due to base-pairing with an oligonucleotide which is capable of forming a base pair with the nucleic acid base to thereby constitutea monolayer.

2. The organic ultrathin membrane according to claim 1, **characterized in that** the amphiphilic compound has a chromophore in the hydrophobic chain as a pigment group.

3. The organic ultrathin membrane according to claim 2, **characterized in that** the chromophore is a photoisomerization group.

4. The organic ultrathin membrane according to claim 3, **characterized in that** the chromophore is an azobenzene group.

5. A cumulative product of an organic ultrathin membrane **characterized in that** a condensed membrane obtained by compressing a monolayer of an organic ultrathin membrane according to any one of claims 1 to 4 is à minated on a solid substrate.

6. A process for producing an organic ultrathin membrane, which is a process for producing an organic ultrathin membrane according to any one of claims 1 to 4 composed of a monolayer, **characterized in that** an amphiphilic compound having a nucleic acid base is spread on an aqueous solution containing an oligonucleotide to form a base pair of the nucleic acid base of the amphiphilic compound and the oligonucleotide to thereby constitute a monolayer.

7. A process for producing a cumulative product of an organic ultrathin membrane **characterized by** compressing a monolayer constituting an organic ultrathin membrane obtained by the process according to claim 6 to forma condensed membrane and laminating the condensed membrane on a solid substrate.
